# EUROPÄISCHE PATENTANMELDUNG

(11) **EP 1 801 436 A1**
(43) Veröffentlichungstag der Anmeldung: **27.06.2007**
(21) Anmeldenummer: 05025691.6
(22) Anmeldetag: 24.11.2005
(51) Int. Cl.: F16C 32/04

(54) **Magnetlager**

(71) Anmelder: SIEMENS AKTIENGESELLSCHAFT, 80333 München (DE)
(72) Erfinder: Haje, Detlef, Dr., 02826 Görlitz (DE)

(57) **Zusammenfassung**

Die Erfindung geht aus von einem Magnetlager (6, 48, 60, 68) mit einer Rotationsachse (22), einem Rotorelement (10, 42, 70), einem Statorelement (16, 46, 72) und einer Magneteinheit (32).

Es wird ein einfaches Magnetlager (6, 48, 60, 68) vorgeschlagen, das sowohl passiv als auch aktiv sein kann und einen Rotor (2, 38) auf einfache Weise in einer gewünschten Position zu einem Stator (8) hält. Hierzu umfasst das Rotorelement (10, 42, 70) ein erstes um die Rotationsachse (22) angeordnetes Feldübergabemittel (12, 78) und das Statorelement (16, 46, 72) ein zweites um die Rotationsachse (22) angeordnetes Feldübergabemittel (18, 80), wobei die Magneteinheit (32) zum Erzeugen eines anziehenden Magnetfelds zwischen dem ersten und dem zweiten Feldübergabemittel (12, 18, 78, 80) vorgesehen ist, und die Feldübergabemittel (12, 18, 78, 80) so angeordnet sind, dass das Magnetfeld bei einer gewünschten Relativposition des Rotorelements (10, 42, 70) zum Statorelement (16, 46, 72) in einem energetischen Minimum ist.

## Beschreibung

Die Erfindung betrifft ein Magnetlager mit einer Rotationsachse, einem Rotorelement, einem Statorelement und einer Magneteinheit.

Es sind so genannte passive Magnetlager mit Permanentmagneten oder gleichmäßig bestromten Elektromagneten bekannt, bei denen der Rotor beispielsweise durch ein abstoßendes Magnetfeld in einer gewünschten Position zum Stator - beispielsweise zentriert - gehalten wird. Ebenfalls bekannt sind so genannte aktive Magnetlager, bei denen der Rotor durch mehrere geregelte Elektromagneten in einer gewünschten Position gehalten wird.

Es ist die Aufgabe der Erfindung ein Magnetlager anzugeben, mit dem ein Rotor auf einfache Weise in einer gewünschten Position relativ zum Stator gehalten werden kann.

Diese Aufgabe wird erfindungsgemäß durch ein Magnetlager der eingangs genannten Art gelöst, bei dem das Rotorelement ein erstes um die Rotationsachse angeordnetes Feldübergabemittel und das Statorelement ein zweites um die Rotationsachse angeordnetes Feldübergabemittel aufweist und die Magneteinheit zum Erzeugen eines anziehenden Magnetfelds zwischen dem ersten und dem zweiten Feldübergabemittel vorgesehen ist, wobei die Feldübergabemittel so angeordnet sind, dass das Magnetfeld bei einer gewünschten Relativposition des Rotorelements zum Statorelement in einem energetischen Minimum ist. Im Gegensatz zu einem Magnetlager, bei dem der Rotor von Magneten von mehreren Seiten angezogen und durch eine Regelung des Magnetfelds in einem metastabilen Zustand gehalten wird, in dem das Magnetfeld ein energetisches Maximum aufweist, kann bei der Erfindung auf eine Zentrierungsregelung des Magnetfelds bzw. des magnetischen Flusses zwischen den Feldübergabemitteln verzichtet und das Magnetlager einfach ausgeführt werden.

Die gewünschte Position kann bei einem Radiallager eine Zentrierung des Rotors zum Stator sein oder bei einem Axiallager eine gewünschte axiale Position des Rotors zum Stator. Die Feldübergabemittel sind Mittel, an denen ein Übertritt des Magnetfelds bzw. magnetischen Flusses von z.B. einem metallischen, insbesondere ferromagnetischen Material zu z.B. Luft - und umgekehrt - vorgesehen ist. Ein Feldübergabemittel kann aus Sintermaterial hergestellt sein oder ein Blech umfassen. Die Magneteinheit kann einen oder mehrere Permanentmagnete, konstant bestromte Elektromagnete oder geregelt bestromte Elektromagnete umfassen.

Die beiden Feldübergabemittel können jeweils mindestens zwei einzelne, konzentrisch um die Rotationsachse angeordnete Feldübergabeelemente umfassen. Eine besonders stabile Positionierung des Rotors kann erreicht werden, wenn die beiden Feldübergabemittel jeweils eine um die Rotationsachse umlaufende Feldübergabeeinheit aufweisen. Als umlaufend wird auch eine Feldübergabeeinheit verstanden, die im Vergleich zum Umfang dünne radiale Schlitze aufweist. Mit gleichem Vorteil sind die beiden Feldübergabeeinheiten in gleichem radialen Abstand zur Rotationsachse angeordnet.

Die Stabilität der Positionierung kann weiter erhöht werden, wenn zumindest eines der Feldübergabemittel zwei Feldübergabeeinheiten aufweist, die relativ zueinander parallel zur Rotationsachse angeordnet sind. Zweckmäßigerweise ist hierbei die Magneteinheit zu einer unterschiedlichen Polung der beiden Feldübergabeeinheiten vorgesehen, wodurch auf einfache Weise ein magnetischer Fluss aus einem Feldübergabemittel in das andere Feldübergabemittel erreicht werden kann.

Durch nichtferromagnetische Trenneinheiten, durch die mit den Feldübergabeeinheiten jeweils verbundene Magnetleiter voneinander getrennt sind, kann ein magnetischer Fluss zwischen den Magnetleitern gering gehalten und der magnetische Fluss an den Feldübergabeeinheiten konzentriert werden.

Einer unerwünschten Umlagerung des magnetischen Flusses in Umfangsrichtung kann entgegengewirkt werden, wenn zumindest eine Feldübergabeeinheit in zumindest zwei in Umfangsrichtung zueinander angeordnete Feldübergabeelemente aufgeteilt ist. Die Feldübergabeelemente sind zweckmäßigerweise durch Luft oder nichtferromagnetisches Material voneinander beabstandet. Die unerwünschte Umlagerung kann weitergehend eingeschränkt werden, wenn die Magneteinheit zur Aufbringung einer magnetischen Polung auf die Feldübergabeelemente aus unabhängigen magnetischen Kreisen vorgesehen ist. Die Magneteinheit kann einfach gehalten sein, wenn die Polung der Feldübergabeelemente gleich ist.

Die Magneteinheit kann einfach gehalten werden, wenn gleich gepolte Feldübergabeeinheiten mittels zur Magnetflussleitung vorgesehenen Materials magnetisch leitend miteinander verbunden sind.

Eine große Konzentration des magnetischen Flusses und damit eine stabile Lagerung des Rotors kann erreicht werden, wenn die Feldübergabeeinheiten jeweils einen zur jeweils anderen Feldübergabeeinheit gerichteten Vorsprung zur Magnetfeldkonzentration aufweisen. Bei einem Radiallager sind die Vorsprünge zweckmäßigerweise parallel, bei einem Axiallager senkrecht zur Rotationsachse ausgerichtet.

Eine besondere Eignung des Magnetlagers als Radiallager wird erreicht, wenn die beiden Feldübergabemittel relativ zueinander parallel zur Rotationsachse angeordnet sind. Eine besondere Eignung des Magnetlagers als Axiallager wird erreicht, wenn die beiden Feldübergabemittel relativ zueinander senkrecht zur Rotationsachse angeordnet sind.

Die Magneteinheit kann Permanentmagnete oder mit Gleichstrom beaufschlagte Elektromagnete zur Erzeugung des Magnetfelds aufweisen, wodurch die Magneteinheit besonders einfach gehalten werden kann. Alternativ oder zusätzlich ist das Magnetfeld ein magnetisches Wechselfeld, wobei die Magneteinheit zur Erzeugung des Magnetfelds mit Wechselstrom vorgesehen sein kann. Es ist eine einfache und präzise Steuerung des magnetischen Flusses erreichbar. Um einen verschwindenden magnetischen Fluss und damit einen Einbruch der Lagersteifigkeit zu vermeiden ist das Magnetfeld ein mindestens dreiphasiges magnetisches Wechselfeld. Hierbei kann die Magneteinheit zu einer Erzeugung des Magnetfelds z.B. durch eine Drehstrom-Ansteuerung vorgesehen sein, so dass ein Magnetfeld mit zumindest drei Magnetflussphasen erzeugt wird.

Ist die Magneteinheit zusätzlich dazu vorgesehen, zwei in Axialrichtung hintereinander angeordnete Feldübergabeeinheiten eines Feldübergabemittels mit unterschiedlichen Magnetflussphasen zu beaufschlagen, insbesondere mit Drehstrom und drei Magnetflussphasen, kann eine besonders einfache und stabile Lagerung erzielt werden. Zweckmäßigerweise sind gleich gepolte Feldübergabeeinheiten jeweils magnetisch leitend verbunden.

In einer weiteren vorteilhaften Ausgestaltung der Erfindung ist die Magneteinheit zur Erzeugung des Magnetfelds mit Drehstrom vorgesehen, wobei bei mehreren Paaren benachbarter Feldübergabeeinheiten eines Feldübergabemittels jeweils eine Feldübergabeeinheit mit einem Magnetwechselfeld und die andere mit einem konstanten Magnetfeld beaufschlagt ist. Hierdurch kann die Montierbarkeit des Magnetlagers einfach gehalten werden. Als konstantes Magnetfeld wird auch ein Nullfeld bezeichnet, also ein nicht vorhandenes Magnetfeld.

Die Erfindung wird anhand von Ausführungsbeispielen näher erläutert, die in den Zeichnungen dargestellt sind.

Es zeigen:
- FIG 1: ein als Magnetlager ausgeführtes Radiallager mit einem Rotorelement, einem Statorelement und einer schematisch dargestellten Magneteinheit,
- FIG 2: zwei Feldübergabeeinheiten des Statorelements und eine Feldübergabeeinheit des Rotorelements,
- FIG 3: die Feldübergabeeinheit des Rotorelements in einer unzentrierten Position,
- FIG 4: eine Welle mit aufgeschrumpftem Feldübergabemittel,
- FIG 5: eine Welle mit einer Hülse zur magnetischen Trennung von einem Feldübergabemittel,
- FIG 6: ein in Umfangrichtung in sechs Segmente aufgeteiltes Feldübergabemittel eines Statorelements,
- FIG 7: Feldübergabeeinheiten des Feldübergabemittels aus FIG 6,
- FIG 8: eine Magneteinheit für das Feldübergabemittel aus FIG 6,
- FIG 9: ein in Umfangrichtung in zwölf Segmente aufgeteiltes Feldübergabemittel eines Statorelements,
- FIG 10: Feldübergabeeinheiten des Feldübergabemittels aus FIG 9,
- FIG 11: eine Magneteinheit für das Feldübergabemittel aus FIG 9,
- FIG 12: ein als Magnetlager ausgeführtes Axiallager,

- FIG 13: je zwei Feldübergabeeinheiten des Statorelements und des Rotorelements und
- FIG 14: die Feldübergabeeinheit des Rotorelements in einer unzentrierten Position.

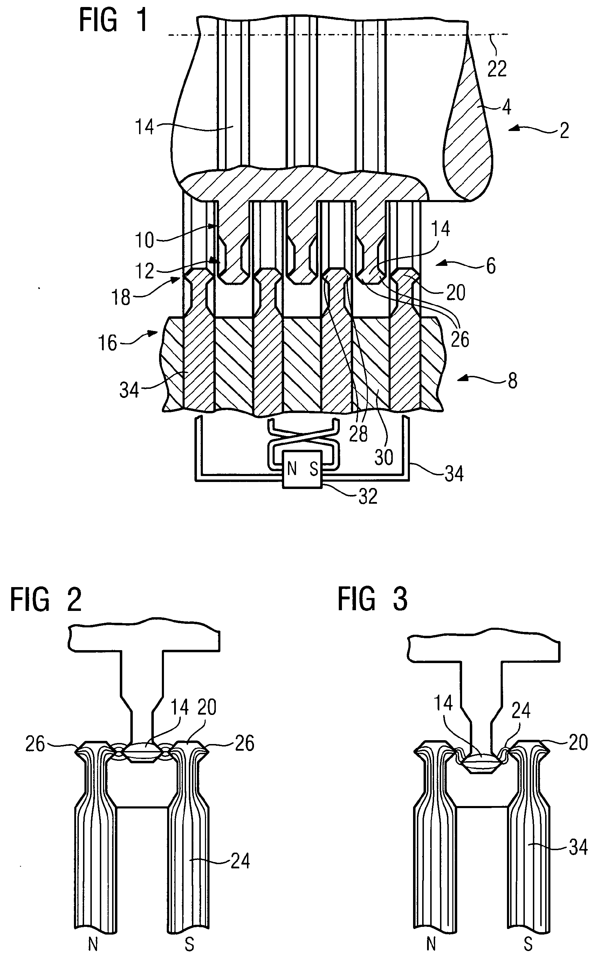

FIG 1 zeigt einen Ausschnitt eines Rotors 2 mit einer Welle 4, der mit Hilfe eines als Radiallager ausgeführten Magnetlagers 6 zentriert in einem Stator 8 gehalten ist. Das Magnetlager 6 weist am Rotor 2 ein Rotorelement 10 mit einem Feldübergabemittel 12 auf, das eine Anzahl von Feldübergabeeinheiten 14 aufweist, die jeweils als Kopf von die Welle 4 umlaufende Ausformungen ausgeführt sind. Am Stator 8 weist das Magnetlager 6 ein Statorelement 16 mit einem analog ausgeführten Feldübergabemittel 18 mit einer Anzahl von Feldübergabeeinheiten 20 auf. Die Feldübergabeeinheiten 14, 20 sind parallel zu einer Rotationsachse 22 der Welle 4 angeordnet und umlaufen diese jeweils kreisförmig. Zur Leitung und Konzentration eines magnetischen Flusses 24 (FIG 2 und 3) sind die Ausformungen des Rotorelements 10 und des Statorelements 16 aus ferromagnetischem Material gefertigt und umfassen jeweils einen Magnetleiter 34, einen Hals und zwei antiparallel ausgerichtete, bzw. gegenüberliegende Vorsprünge 26, 28, wobei die Vorsprünge 26 des Rotorelements 10 jeweils zu den Vorsprüngen 28 des Statorelements weisen. Während die Ausformungen des Rotorelements 10 einstückig mit der Welle 4 und somit alle zusammenhängend ausgeführt sind, sind die Ausformungen des Statorelements 16 als Bleche ausgeführt und magnetisch voneinander jeweils durch eine nichtferromagnetische Trenneinheit 30 in Form einer Zwischenschicht voneinander getrennt. Durch die Trenneinheiten 30 ist der kleinste Abstand zwischen den Blechen im Bereich der um die Rotationsachse 22 konzentrisch umlaufenden Vorsprünge 28, um den magnetischen Fluss 24 außerhalb der Vorsprünge 28 so gering wie möglich zu halten.

Das Magnetlager 6 weist ferner eine in FIG 1 nur schematisch dargestellte Magneteinheit 32 zur Erzeugung eines anziehenden Magnetfelds zwischen den Feldübergabeeinheiten 14 des Rotorelements 10 und den Feldübergabeeinheiten 20 des Statorelements 16 durch einen magnetischen Fluss 24 von jeweils einer Feldübergabeeinheit 20 des Statorelements 16 zu den beiden benachbarten Feldübergabeeinheiten 20 des Statorelements 16 auf. Hierzu ist die Magneteinheit 32 über Magnetleiter 34 mit den Ausformungen des Statorelements 16 verbunden, und zwar so, dass jeweils benachbarte Ausformungen bzw. Feldübergabeeinheiten 20 des Statorelements 16 magnetisch unterschiedlich gepolt sind.

Die FIG 2 und 3 zeigen schematisch jeweils zwei Feldübergabeeinheiten 20 des Statorelements 16 mit einer dazwischenliegenden Feldübergabeeinheit 14 des Rotorelements 10 und den während des Betriebs des Magnetlagers 6 durch sie fließenden magnetischen Fluss 24. Der magnetische Fluss 24 übt in Axialrichtung von den Feldübergabeeinheiten 20 eine gleiche anziehende Kraft auf die dazwischenliegende Feldübergabeeinheit 14 aus, so dass sich diese Kräfte in Axialrichtung die Waage halten. Bei einer gewünschten zentrierten Anordnung des Rotors 2 zum Stator 8 ist das durch den magnetischen Fluss 24 aufrechterhaltene Magnetfeld in einem energetischen Minimum. Rückt die Welle und mit ihr die Feldübergabeeinheiten 14 aus der Zentrierung, wie in FIG 3 abgebildet, so wird dem Magnetfeld Energie zugeführt, so dass es den Rotor 2 in die zentrierte Ausrichtung und somit in das energetische Minimum zurückzieht. Auf diese Weise wird der Rotor 2 in seiner Zentrierung gehalten.

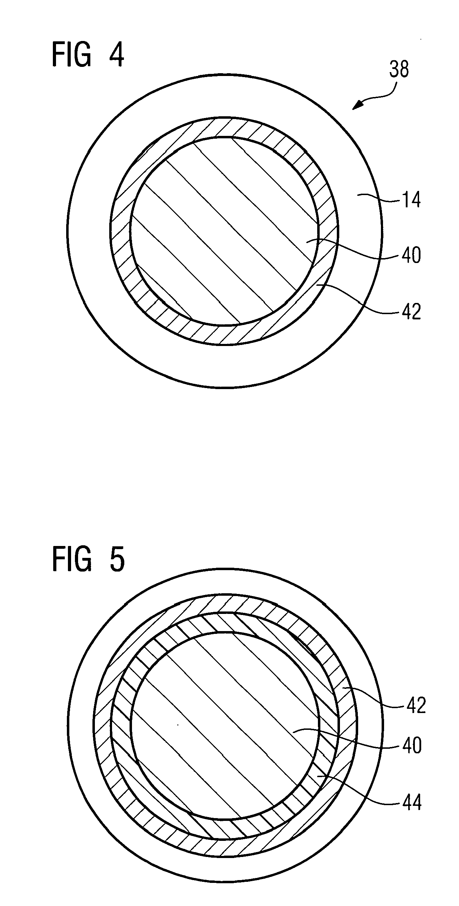

FIG 4 zeigt einen alternativen Rotor 38 mit einer Welle 40. Bezüglich gleichbleibender Merkmale wird auf die Beschreibung zum Ausführungsbeispiel der FIG 1 bis 3 verwiesen. In den folgenden Ausführungsbeispielen werden lediglich die Unterschiede zu dem Ausführungsbeispiel der FIG 1 bis 3 beschrieben, wobei gleichbleibende Bauteile grundsätzlich mit den gleichen Bezugszeichen beziffert sind. Um magnetische Verluste gering zu halten, sind ein Rotorelement 42 und die Welle 40 aus unterschiedlichen Materialien hergestellt und das Rotorelement 42 ist auf die Welle 40 aufgeschrumpft. Seine mehreren Feldübergabeeinheiten 14 sind hierbei aus einem Sintermaterial gefertigt und einstückig miteinander verbunden.

Bei dem Ausführungsbeispiel in FIG 5 ist ein Rotorelement 42 durch eine nichtferromagnetische Hülse 44 von der Welle 40 räumlich und magnetisch getrennt. Eine solche Anordnung ist sinnvoll, wenn die Magneteinheit 32 das Magnetfeld auf das Rotorelement 42 aufbringt, oder wenn der Innenteil des Lagers beispielsweise Teil eines Stators ist. In einem solchen Fall ist das Rotorelement 42 zweckmäßigerweise so aufgebaut, wie das in FIG 1 beschriebene Statorelement 16, also mit Trenneinheiten 30 zwischen den Ausformungen.

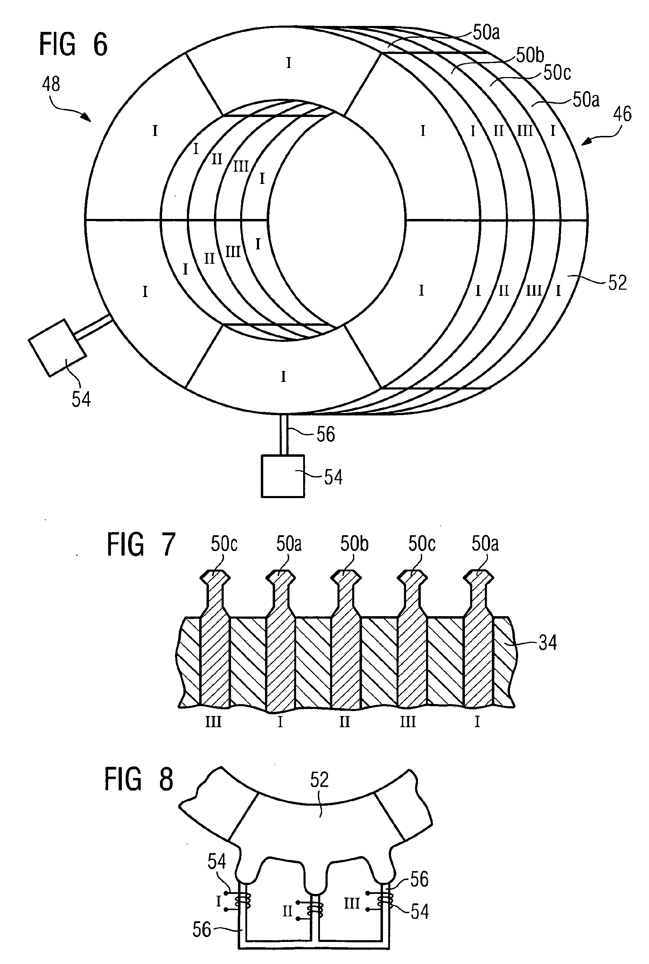

Die Magneteinheit 32 kann als Permanentmagnete ausgeführt sein, beispielsweise, indem die die Ausformungen bildenden Bleche permanent magnetisiert sind. In FIG 6 ist als Alternative ein Statorelement 46 eines Magnetlagers 48 in schematischer Weise gezeigt, bei dem die Erzeugung des Magnetfelds mit einer Dreiecksschaltung mit drei Phasen von Drehstrom realisiert ist. Das Statorelement 46 umfasst vier ringförmige Feldübergabeeinheiten 50a bis 50c, die jeweils in sechs Feldübergabeelemente 52 in Form von Segmenten aufgeteilt sind. Jedes der sechs Feldübergabeelemente 52 der Feldübergabeeinheit 50a ist mit einem Magnetmittel 54 einer Magneteinheit verbunden, so dass die magnetische Polung auf die sechs Feldübergabeelemente 52 aus sechs voneinander unabhängigen Kreisen aufgebracht wird. Die Feldübergabeelemente 52 der Feldübergabeeinheiten 50b und 50c sind in analoger Weise jeweils mit je sechs Magnetmitteln 54 verbunden, die in FIG 6 der Übersichtlichkeit halber nicht gezeigt sind.

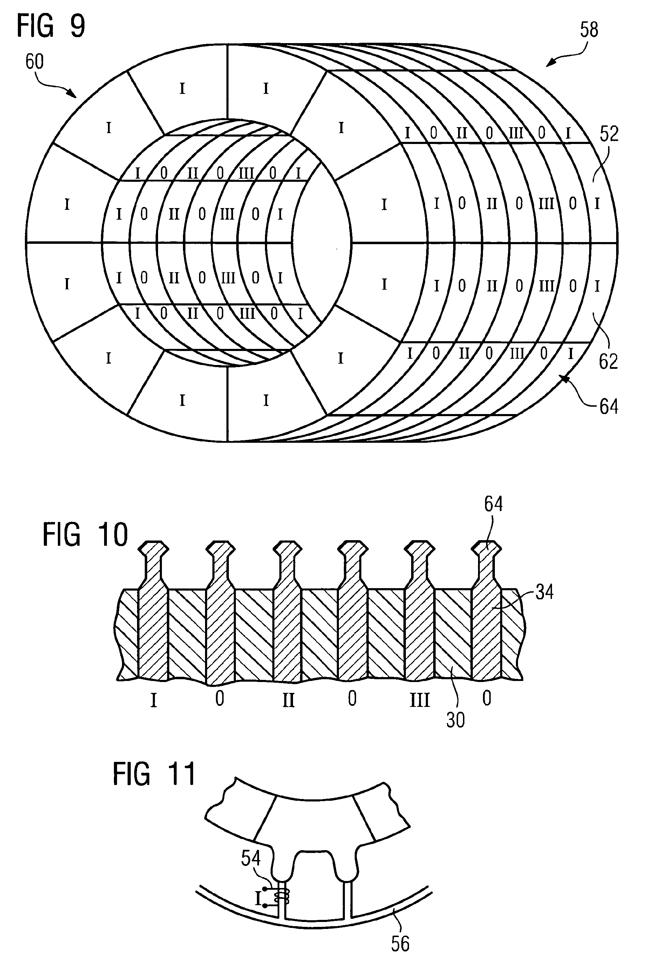

Die Magnetmittel 54 sind Spulen (siehe FIG 8), die ein Magnetfeld auf einen Magnetleiter 56 aufbringen, der mit einem der Feldübergabeelemente 52 verbunden ist und den magnetischen Fluss 24 auf dieses überträgt. Die Spulen werden im Betrieb mit den drei Phasen von Drehstrom in einer Dreiecksschaltung bestromt, so dass drei hintereinanderliegende Feldübergabeelemente 52 mit drei magnetischen Flüssen 24 in unterschiedlicher Phase beaufschlagt werden. Die Phasen sind in den FIG 6 bis 11 mit I, II und III gekennzeichnet.

Ein schematischer Schnitt durch Feldübergabeeinheiten 50a-c ist in FIG 7 dargestellt. Zusätzlich dargestellt ist jeweils die Phase des magnetischen Flusses 24. Jeweils drei hintereinander liegende Feldübergabeeinheiten 50a-c sind zu einem Päckchen mit den Magnetleitern 56 verbunden und von 3 x 6 Spulen mit magnetischem Fluss beaufschlagt. Alternativ können mehrere oder alle hintereinander liegenden Feldübergabeelemente 52, die mit der gleichen Phase beaufschlagt werden, mit einem einzigen Magnetmittel versorgt werden, das über Magnetleiter mit den Feldübergabeelementen 52 verbunden ist. Die Feldübergabeelemente 52 einer Feldübergabeeinheit 50a-c sind mit der gleichen Phase beaufschlagt, wobei die Feldübergabeelemente 52 einer Feldübergabeeinheit 50a-c durch Luftspalte oder eine nichtferromagnetische Trennschicht magnetisch voneinander getrennt sind.

Durch eine Änderung des magnetischen Flusses 24 durch kleinere oder größere Ströme durch die Spulen ist eine gezielte Lagersteifigkeit erzielbar. Hierzu umfasst das Magnetlager 48 eine Steuereinheit, die die Ströme durch die Spulen steuert. Hierdurch können kritische Drehzahlbereiche gut durchfahren werden oder so eingestellt werden, dass sie weit weg vom momentanen Betriebszustand der Maschine liegen.

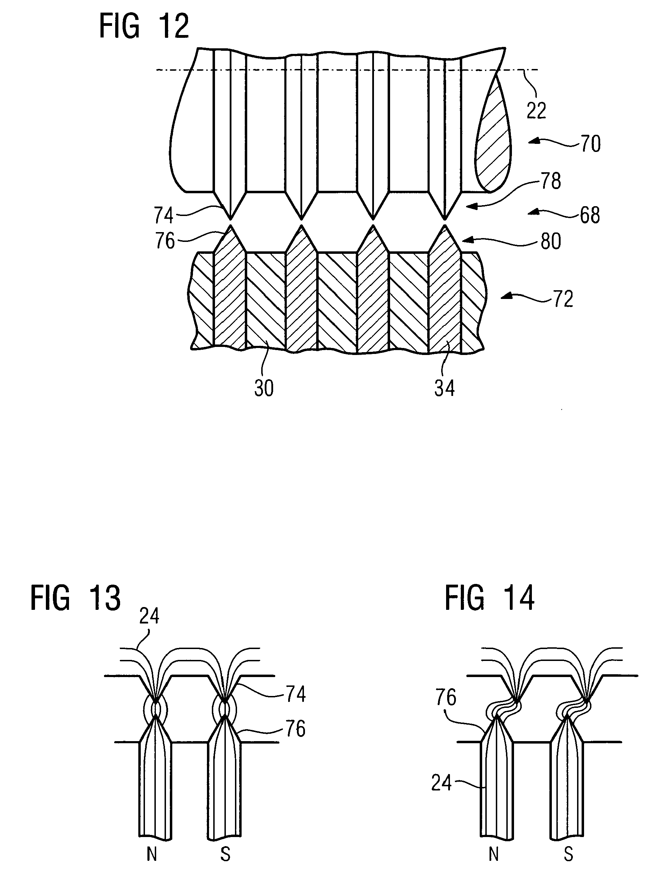

In FIG 9 ist als weitere Alternative ein Statorelement 58 eines Magnetlagers 60 in schematischer Weise gezeigt, bei dem die Erzeugung des Magnetfelds mit einer Sternschaltung mit drei Phasen von Drehstrom realisiert ist. Hierbei sind die jeweils in zwölf Feldübergabeelemente 62 unterteilte Feldübergabeeinheiten 64 wie in FIG 10 dargestellt mit magnetischen Flussphasen beaufschlagt, dass jede zweite Feldübergabeeinheit 64 - analog zum Sternpunkt - phasenlos passiv ist und nicht direkt mit einem Magnetmittel verbunden ist. Wie in FIG 11 gezeigt, sind alle Feldübergabeelemente 62 von jeweils zwei hintereinander liegenden Feldübergabeeinheiten 64 durch einen Magnetleiter 56 miteinander verbunden.

FIG 12 zeigt ein als Axiallager ausgeführtes Magnetlager 68 mit einem Rotorelement 70 und einem Statorelement 72. Sowohl vom Rotorelement 70 als auch vom Statorelement 72 sind vier Feldübergabeeinheiten 74, 76 eines Feldübergabemittels 78, 80 gezeigt. Die Feldübergabeeinheiten 74, 76 sind als konzentrisch um die Rotationsachse 22 umlaufende und in Radialrichtung ausgerichtete Vorsprünge ausgeführt, wobei die Feldübergabeeinheiten 76 des Statorelements 72 von Trenneinheiten 30 magnetisch voneinander getrennt sind.

Der magnetische Fluss 24 in und zwischen den Feldübergabeeinheiten 74, 76 ist in den FIG 13 und 14 gezeigt. Analog zu der zu den FIG 2 und 3 beschriebenen Wirkungsweise wird das Rotorelement 70 durch das Magnetfeld in die in FIG 13 dargestellte gewünschte axiale Position gezogen, in der das Magnetfeld sein energetisches Minimum hat.

## Patentansprüche

1. Magnetlager (6, 48, 60, 68) mit einer Rotationsachse (22), einem Rotorelement (10, 42, 70) mit einem ersten um die Rotationsachse (22) angeordneten Feldübergabemittel (12, 78),
einem Statorelement (16, 46, 72) mit einem zweiten um die Rotationsachse (22) angeordneten Feldübergabemittel (18, 80) und
einer Magneteinheit (32) zum Erzeugen eines anziehenden Magnetfelds zwischen dem ersten und dem zweiten Feldübergabemittel (12, 18, 78, 80),
wobei die Feldübergabemittel (12, 18, 78, 80) so angeordnet sind, dass
das Magnetfeld bei einer gewünschten Relativposition des Rotorelements (10, 42, 70) zum Statorelement (16, 46, 72) in einem energetischen Minimum ist.

2. Magnetlager (6, 48, 60, 68) nach Anspruch 1,
**dadurch gekennzeichnet, dass**
die beiden Feldübergabemittel (12, 18, 78, 80) jeweils eine um die Rotationsachse (22) umlaufende Feldübergabeeinheit (14, 20, 50a-c, 64, 74, 76) aufweisen.

3. Magnetlager (6, 48, 60, 68) nach Anspruch 1 oder 2,
**dadurch gekennzeichnet, dass**
zumindest eines der Feldübergabemittel (12, 18, 78, 80) zwei Feldübergabeeinheiten (14, 20, 50a-c, 64, 74, 76) aufweist, die relativ zueinander parallel zur Rotationsachse (22) angeordnet sind.

4. Magnetlager (6, 48, 60, 68) nach Anspruch 3,
**dadurch gekennzeichnet, dass**
die Magneteinheit (32) zur unterschiedlichen Polung der beiden Feldübergabeeinheiten (14, 20, 50a-c, 64, 74, 76) vorgesehen ist.

5. Magnetlager (6, 48, 60, 68) nach Anspruch 3 oder 4,
**dadurch gekennzeichnet, dass**
die Feldübergabeeinheiten (20, 50a-c, 64, 76) jeweils mit Magnetleitern (34) verbunden sind, die von nichtferromagnetischen Trenneinheiten (30) voneinander getrennt sind.

6. Magnetlager (48, 60, 68) nach einem der Ansprüche 3 bis 5,
**dadurch gekennzeichnet, dass**
zumindest eine Feldübergabeeinheit (50a-c, 64) in zumindest zwei in Umfangsrichtung zueinander angeordnete Feldübergabeelemente (52, 62) aufgeteilt ist.

7. Magnetlager (48, 60, 68) nach Anspruch 6,
**dadurch gekennzeichnet, dass**
die Magneteinheit (32) zur Aufbringung einer magnetischen Polung auf die Feldübergabeelemente (52, 62) aus unabhängigen magnetischen Kreisen vorgesehen ist.

8. Magnetlager (6, 48, 60, 68) nach einem der Ansprüche 3 bis 7,
**dadurch gekennzeichnet, dass**
die Feldübergabeeinheiten (14, 20, 50a-c, 64, 74, 76) jeweils einen zur jeweils anderen Feldübergabeeinheit (14, 20, 50a-c, 64, 74, 76) gerichteten Vorsprung (26, 28) zur Magnetfeldkonzentration aufweisen.

9. Magnetlager (6, 48, 60) nach einem der vorhergehenden Ansprüche,
**dadurch gekennzeichnet, dass**
die beiden Feldübergabemittel (12, 18) relativ zueinander parallel zur Rotationsachse (22) angeordnet sind.

10. Magnetlager (68) nach einem der vorhergehenden Ansprüche,
**dadurch gekennzeichnet, dass**
die beiden Feldübergabemittel (78, 80) relativ zueinander senkrecht zur Rotationsachse (22) angeordnet sind.

11. Magnetlager (6, 48, 60, 68) nach einem der vorhergehenden Ansprüche,
**dadurch gekennzeichnet, dass**
das Magnetfeld ein magnetisches Wechselfeld ist.

12. Magnetlager (48, 60, 68) nach einem der vorhergehenden Ansprüche,
**dadurch gekennzeichnet, dass**
bei mehreren Paaren benachbarter Feldübergabeeinheiten (64, 74, 76) eines Feldübergabemittels (78, 80) jeweils eine mit einem Magnetwechselfeld und die andere mit einem konstanten Magnetfeld beaufschlagt ist.
